# EUROPÄISCHE PATENTANMELDUNG

(11) **EP 1 435 513 A2**
(43) Veröffentlichungstag der Anmeldung: **07.07.2004**
(21) Anmeldenummer: 03400071.1
(22) Anmeldetag: 12.12.2003
(51) Int. Cl.: G01G 19/02

(54) **Radlastwaage**

(30) Priorität: 13.12.2002 DE 20219527 U
(71) Anmelder: Nitec Engineering GmbH, 56651 Niederzissen (DE)
(72) Erfinder: Gerl, Oswald, D-53179 Bonn (DE); Hartelt, Arndt, D-56766 Ulmen (DE)
(74) Vertreter: Rumrich, Gabriele, Dipl.-Ing.

(57) **Zusammenfassung**

Die Erfindung betrifft eine Radlastwaage mit einer die Radlast aufnehmenden Wägeplatte, einem Waageunterteil sowie einem zwischen Wägeplatte und Waageunterteil angeordneten Messsystem zur Messung der Radlast eines Fahrzeuges.

Die Aufgabe besteht darin, eine Radlastwaage zu entwickeln, die bei kleiner Bauhöhe und geringem Gewicht eine große Standsicherheit und Messgenauigkeit besitzt, wobei ihr Einsatzbereich über die Bestimmung der Radlast hinausgeht. Erfindungsgemäß weist die Radlastwaage eine höhenverstellbare Dreipunktauflage sowie eine Vorrichtung zur Messung des Abstandes des Fahrzeuges von der Bodenoberfläche auf.

## Beschreibung

Die Erfindung betrifft eine Radlastwaage mit einer die Radlast aufnehmenden Wägeplatte, einem Waageunterteil sowie einem zwischen Wägeplatte und Waageunterteil angeordneten Messsystem zur Messung der Radlast eines Fahrzeuges.

Radlastwaagen dienen zur Bestimmung der Radlast von Kraftfahrzeugen, wobei die Waage jeweils unter dem Rad angeordnet wird, dessen Radlast bestimmt werden soll. Aus den Wägeergebnissen der einzelnen Fahrzeugräder kann die Fahrzeuglast ermittelt werden. Das zu verwiegende Rad wird dabei angehoben und auf der Waage abgesetzt. Durch das Anheben des zu verwiegenden Rades gegenüber den übrigen, auf der Straßenoberfläche stehenden Rädern entsteht ein Messfehler, der umso größer ist, je höher das Rad gehoben werden muss. Ab einer bestimmten Höhe müssen die übrigen Räder aufgekeilt werden, was wiederum mit einem großen Aufwand verbunden ist.

Es wurden deshalb Radlastwaagen entwickelt, die eine relativ geringe Bauhöhe aufweisen. So wird in der DE 33 40 355 A1 eine Radlastwaage beschrieben, die eine rechteckige, flache Platte aufweist, die aus einem Leichtmaterial mit Messeigenschaften besteht. An zwei gegenüberliegenden Rändern ist sie mit verformbaren Stegen versehen, an denen Dehnungsmessstreifen angeordnet sind. Durch die flache Ausführung der Waage kann zwar die ansonsten auf Grund des Höhenunterschiedes zwischen zu verwiegendem Rad und den sich auf dem Boden befindenden Rädern vorhandene Messungenauigkeit verringert werden. Allerdings führen hier unvermeidbare Durchbiegungen der Wägeplatte, die an deren Rändern auftreten, zu einer Beeinflussung der Messergebnisse und damit zu einem Wägefehler.

In DE 43 31 149 A1 wird eine ebenfalls flache Radlastwaage offenbart, die kreisförmig ausgebildet ist. Die Wägeplatte ist über ein inneres kreisförmiges Biegegelenk mit einem konzentrischen Biegering verbunden, der sich wiederum über ein äußeres kreisförmiges Biegegelenk am Rand des scheibenförmigen Waageunterteils abstützt, wobei zwei Dehnungsmessstreifen über den Umfang verteilt und in einer Vollbrückenschaltung zusammengeschaltet sind. Dadurch soll eine Kompensierung der sich aus der Biegeverformung der Wägeplatte ergebenden Einflüsse erreicht werden.

Diese bekannten Radlastwaagen mit geringer Bauhöhe weisen aus den weiter oben erläuterten Ursachen eine größere Messgenauigkeit auf, als die Waagen mit großer Bauhöhe. Allerdings sind sie noch anfällig z.B. gegenüber einem außermittigen Lastangriff. Bei einem ungenauen Aufsetzen des zu verwiegenden Rades entstehen Messfehler, die nicht berichtigt werden können. Im Extremfall kann die Standsicherheit des Fahrzeuges nicht mehr gewährleistet werden. Insbesondere im Bereich des Rennsports werden leichte, aber sichere Radlastwaagen mit großer Messgenauigkeit benötigt.

Die Aufgabe der Erfindung besteht darin, eine Radlastwaage zu entwickeln, die bei kleiner Bauhöhe und geringem Gewicht eine große Standsicherheit und Messgenauigkeit besitzt, wobei ihr Einsatzbereich über die Bestimmung der Radlast hinausgeht.

Erfindungsgemäß weist die Radlastwaage eine höhenverstellbare Dreipunktauflage sowie eine Vorrichtung zur Messung des Abstandes des Fahrzeuges von der Bodenoberfläche auf. Nach einer Ausführungsform der Erfindung ist das Waageunterteil dreieckig ausgebildet und mit der höhenverstellbaren Dreipunktauflage versehen.

Die Wägeplatte ist viereckig ausgebildet und sitzt innerhalb der Dreipunktauflage.

Die Vorrichtung zur Messung des Abstandes des Fahrzeuges von der Bodenoberfläche ist an einem Ausleger angeordnet, der an der Wägeplatte oder zwischen der Wägeplatte und dem Waageunterteil oder an dem Waageunterteil angeordnet ist. Der Ausleger kann dabei von einer Messposition, in welcher er über die Wägeplatte hinausragt, in eine Unterbringungsposition in welcher er keine Messungen durchführt und die Radlastwaage nicht oder nur wenig überragt, verstellt werden.

Das Waageunterteil und/oder die Wägeplatte weisen ein oder mehrere Aussparungen auf, wobei das Messsystem zur Messung der Radlast und die Vorrichtung zur Messung des Abstandes des Fahrzeuges von der Bodenoberfläche vorzugsweise in jeweils einer der Aussparungen befestigbar sind.

Wägeplatte und/oder Waageunterteil werden vorteilhafter Weise zur Erzielung einer leichten Bauweise aus Druckguss/Aluminiumdruckguss gefertigt.

Die Erfindung wird nachfolgend an einem Ausführungsbeispiel näher erläutert.

Es zeigen:

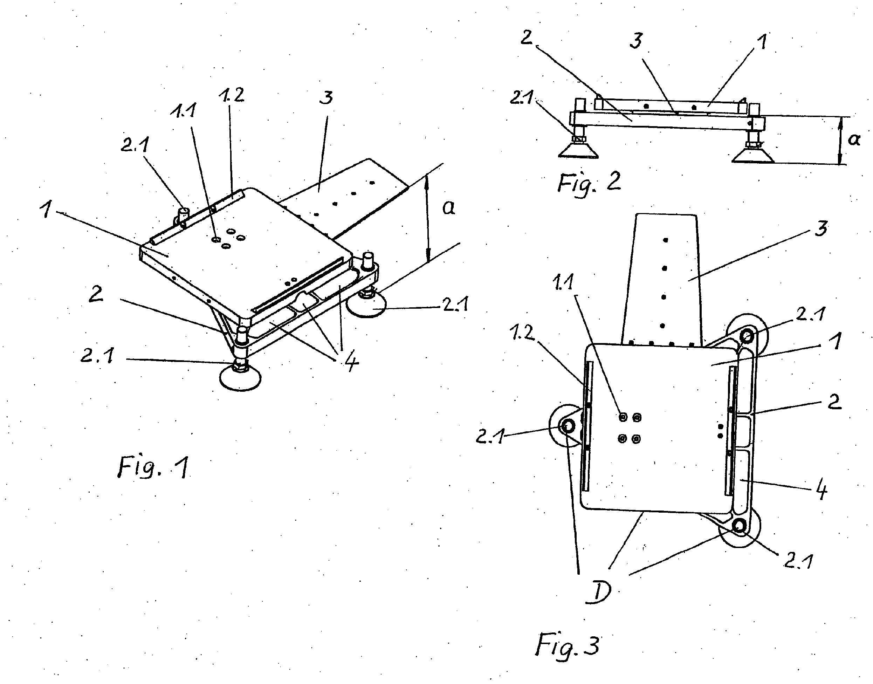

- Fig. 1:: eine räumliche Darstellung der erfindungsgemäßen Radlastwaage,
- Fig. 2:: Vorderansicht der erfindungsgemäßen Radlastwaage,
- Fig. 3:: Draufsicht der erfindungsgemäßen Radlastwaage.

Die Radlastwaage weist auf ihrer oberen Seite eine viereckige Wägeplatte 1 auf, die der Aufnahme eines Rades des Fahrzeuges dient. Das Waageunterteil 2 ist dreieckig ausgebildet und besitzt an seinen Ecken jeweils einen z.B. über Schrauben höhenverstellbaren Fuß 2.1. Die drei Füße 2.1 bilden gemeinsam eine Dreipunktauflage D für die Radlastwaage. Zwischen der Wägeplatte 1 und dem Waageunterteil 2 befindet sich ein hier nicht dargestelltes, an sich bekanntes Messsystem bzw. eine Messzelle die der Messung der Radlast dient. Dabei können serienmäßige Messzellen Verwendung finden. Ebenso ist eine Vorrichtung zur Messung der Fahrzeughöhe, d.h. des Abstandes a des Fahrzeugunterbodens von der Bodenoberfläche, zwischen Wägeplatte 1 und Waageunterteil 2 vorgesehen. Sie besitzt einen Ausleger 3, der mit seinem einen Ende an der Radlastwaage angeordnet ist und sich hier in der Messposition befindet. Die Abstandsmessung kann mittels bekannter Messmittel und Messsysteme z.B. mittels Lasermessung erfolgen.

Das Waageunterteil 2 ist mit Aussparungen 4 versehen und vorzugsweise aus Aludruckguss gefertigt, wodurch eine Verrippung mit den entsprechenden Aussparungen 4 zur Erzielung einer leichten Bauweise einfach herstellbar ist.

Alternativ kann auch die Wägeplatte aus Aludruckguss hergestellt und mit einer Verrippung und entsprechenden Aussparungen versehen sein. Dadurch wird auch deren Gewicht gering gehalten. Das Messsystem zur Messung der Radlast ist vorteilhafter Weise in zueinander korrespondierenden Aussparungen von Wägeplatte und Waageunterteil angeordnet. Auch der Ausleger kann in entsprechenden Ausnehmungen befestigt werden.

In der Wägeplatte 1 angeordnete Gewindebohrungen 1.1 dienen zur Befestigung der Messzelle, während an zwei 5 gegenüberliegenden Rändern der Wägeplatte 1 befindliche Wülste 1.2 die Positionierung des Fahrzeuges unterstützen.

Durch die niedrige Bauhöhe der erfindungsgemäßen Radlastwaage kann das Fahrzeug zur Messung der Radlast mit dem zu verwiegenden Rad auf die Wägeplatte 1 gefahren werden, ohne dass eine externe Hebevorrichtung verwendet werden muss. Die Dreipunktauflage D garantiert einen sicheren Stand und ermöglicht zudem ein leichtes Ausrichten durch die höhenverstellbaren Füße 2.1. Es kann ein exaktes Messen und Einstellen der Radlasten des Fahrzeuges erzielt werden. Damit wurde eine Radlastwaage geschaffen, die mit einem geringen Gewicht und niedriger Bauhöhe ausgestattet ist und eine hohe Standsicherheit und eine große Messgenauigkeit aufweist.

Ein weiterer, insbesondere im Bereich des Rennsports zum Tragen kommender, Vorteil der erfindungsgemäßen Radlastwaage ist ihre Ausstattung mit einer integrierten Vorrichtung zur Messung der Fahrzeughöhe.

## Patentansprüche

1. Radlastwaage, mit einer die Radlast aufnehmenden Wägeplatte (1), einem Waageunterteil (2) sowie einem zwischen Wägeplatte (1) und Waageunterteil (2) angeordneten Messsystem zur Messung der Radlast eines Fahrzeuges, **dadurch gekennzeichnet, dass** sie eine höhenverstellbare Dreipunktauflage (D) sowie eine Vorrichtung zur Messung des Abstandes (a) des Fahrzeuges von der Bodenoberfläche aufweist.

2. Radlastwaage nach Anspruch 1, **dadurch gekennzeichnet, dass** das Waageunterteil (2) dreieckig ausgebildet und mit der höhenverstellbaren Dreipunktauflage (D) versehen ist.

3. Radlastwaage nach Anspruch 1 oder 2, **dadurch gekennzeichnet, dass** die Wägeplatte (1) viereckig ausgebildet ist.

4. Radlastwaage nach einem der Ansprüche 1 bis 3, **dadurch gekennzeichnet, dass** die Wägeplatte (1) innerhalb der Dreipunktauflage (D) sitzt.

5. Radlastwaage nach einem der Ansprüche 1 bis 4, **dadurch gekennzeichnet, dass** die Vorrichtung zur Messung des Abstandes (a) des Fahrzeuges von der Bodenoberfläche an einem Ausleger (3) angeordnet ist.

6. Radlastwaage nach Anspruch 5, **dadurch gekennzeichnet, dass** der Ausleger (2) an der Wägeplatte (1) oder zwischen der Wägeplatte (1) und dem Waageunterteil (2) oder an dem Waageunterteil (2) angeordnet ist.

7. Radlastwaage nach einem der Ansprüche 1 bis 6, **dadurch gekennzeichnet, dass** das Waageunterteil (2) in Richtung zur Wägeplatte (1) ein oder mehrere Aussparungen (4) aufweist.

8. Radlastwaage nach einem der Ansprüche 1 bis 7, **dadurch gekennzeichnet, dass** die Wägeplatte (1) in Richtung zum Waageunterteil (2) ein oder mehrere Aussparungen aufweist.

9. Radlastwaage nach einem der Ansprüche 7 oder 8, **dadurch gekennzeichnet, dass** das Messsystem zur Messung der Radlast in einer Aussparung sitzt.

10. Radlastwaage nach Anspruch 9, **dadurch gekennzeichnet, dass** das Messsystem in zwei zueinander korrespondierenden Aussparungen von Wägeplatte (1) und Waageunterteil (2) sitzt.

11. Radlastwaage nach einem der Ansprüche 1 bis 10, **dadurch gekennzeichnet, dass** die Vorrichtung zur Messung des Abstandes des Fahrzeuges von der Bodenoberfläche in einer Aussparung der Wägeplatte
(1) oder in einer Aussparung des Waageunterteils
(2) oder in zwei zueinander korrespondierenden Aussparungen von Wägeplatte (1) und Waageunterteil (2) befestigbar ist.

12. Radlastwaage nach einem der Ansprüche 1 bis 11, **dadurch gekennzeichnet, dass** Wägeplatte (1) und/oder Waageunterteil (2) aus Druckguss gefertigt sind.

13. Radlastwaage nach Anspruch 12, **dadurch gekennzeichnet, dass** Wägeplatte (1) und/oder Waageunterteil (2) aus Aluminiumdruckguss gefertigt sind.
